(19) **Europäisches Patentamt / European Patent Office / Office européen des brevets**

(11) **EP 2 147 364 B1**

(12) **EUROPÄISCHE PATENTSCHRIFT**

(45) Veröffentlichungstag und Bekanntmachung des Hinweises auf die Patenterteilung:
**22.02.2017 Patentblatt 2017/08**

(21) Anmeldenummer: **08758350.6**

(22) Anmeldetag: **28.04.2008**

(51) Int Cl.:
*G06F 3/038* (2013.01)   *G06F 3/044* (2006.01)

(86) Internationale Anmeldenummer:
**PCT/EP2008/003433**

(87) Internationale Veröffentlichungsnummer:
**WO 2008/131954 (06.11.2008 Gazette 2008/45)**

(54) **SENSOREINRICHTUNG, SOWIE VERFAHREN ZUR GENERIERUNG VON HINSICHTLICH DER POSITION ODER POSITIONSÄNDERUNG VON GLIEDMASSEN INDIKATIVEN SIGNALEN**

SENSOR APPARATUS AND METHOD FOR GENERATING SIGNALS INDICATIVE OF THE POSITION OR CHANGE IN POSITION OF LIMBS

DISPOSITIF DÉTECTEUR ET PROCÉDÉ DE GÉNÉRATION DE SIGNAUX INDIQUANT LA POSITION OU LE CHANGEMENT DE POSITION DE MEMBRES

(84) Benannte Vertragsstaaten:
**AT BE BG CH CY CZ DE DK EE ES FI FR GB GR HR HU IE IS IT LI LT LU LV MC MT NL NO PL PT RO SE SI SK TR**

(30) Priorität: **26.04.2007 DE 102007020873**

(43) Veröffentlichungstag der Anmeldung:
**27.01.2010 Patentblatt 2010/04**

(73) Patentinhaber: **Microchip Technology Germany GmbH**
**82205 Gilching (DE)**

(72) Erfinder: **IVANOV, Artem**
**82205 Gilching (DE)**

(74) Vertreter: **Grubert, Andreas et al**
**c/o Westphal, Mussgnug & Partner**
**Patentanwälte mbB**
**Herzog-Wilhelm-Straße 26**
**80331 München (DE)**

(56) Entgegenhaltungen:
**WO-A-97/41458      DE-A1-102005 038 678**
**US-B1- 6 452 514**

**Beschreibung**

Gebiet der Erfindung

Die Erfindung bezieht sich auf eine Sensoreinrichtung gemäß dem Oberbegriff von Patentanspruch 1. Eine derartige Sensoreinrichtung ist aus WO 97/41458 A bekannt. Weiterhin bezieht sich die Erfindung auch auf ein Verfahren zur Generierung von elektronischen Signalen die als solche Aufschluss über eine räumliche Position, und/oder die Bewegung von Gliedmaßen, insbesondere der Hand eines Anwenders gegenüber der Sensoreinrichtung geben. Diese elektronischen Signale können dann zur Abwinklung von Eingabevorgängen bei Datenverarbeitungs-, Kommunikations- und anderweitigen Elektrogeräten herangezogen werden.

Aufgabe der Erfindung

Der Erfindung liegt die Aufgabe zugrunde, Lösungen zu schaffen durch welche hinsichtlich der Position und/oder der Bewegung von Gliedmaßen indikative Signale in besonders vorteilhafter Weise generiert werden können.

Erfindungsgemäße Lösung

Diese Aufgabe wird erfindungsgemäß durch eine Sensoreinrichtung mit den in Patentanspruch 1 angegebenen Merkmalen oder durch einem Verfahren mit den in Patentanspruch 12 angegebenen Merkmalen gelöst.
Vorteilhafte Ausgestaltungen derselben sind Gegenstrand der Unteransprüche. Vorzugsweise ist ein Synchrondetektorystem vorgesehen, das als solches hinsichtlich der Synchronität des Ausgangssignals am jeweiligen Impedanzwandlersystem, insbesondere bezüglich des Spannungspegels und/oder der Phase gegenüber der Erregerspannung indikative Signale liefert. Anhand von Unterschieden zwischen den und den Ausgängen des jeweiligen Synchrondetektors anliegenden elektrischen Ereignissen können die orts- oder bewegungsindikativen Informationen gewonnen werden.
Gemäß einer besonders bevorzugten Ausführungsform der Erfindung sind die Empfangselektroden symmetrisch um die Geberelektrodeneinrichtung herum angeordnet. Die Geberelektrode wird vorzugsweise von einem Generator (Mikrocontroller) mit Wechselspannung versorgt um um sich herum ein elektrisches, an sich vorzugsweise quasistatisches elektrisches Feld zu bilden. Die Empfangselektroden sind vorzugsweise symmetrisch um die Geberelektrode angeordnet.
Die an den Empfangselektroden anliegende elektrische Spannung beinhaltet Information über die Verteilung des Feldes der Geberelektrode.
Die Empfangselektroden sind an die hochohmigen Eingänge der Impedanzwandler angeschlossen um das elektrische Feld der Geberelektrode nicht zu stören. Aus den jeweiligen Signalen nach dem Impedanzwandler wird ein Mittelwert gebildet. Dieser Mittelwert kann verstärkt werden. Aus den verstärkten Signalen kann mit Hilfe eines Synchrondetektors die Amplitude gewonnen werden und weiter von einem ADC digitalisiert und für Auswertung in einen Mikrocontroller übergeben werden. Statt des Synchrondetektors kann auch ein Diodengleichrichter oder Peakdetektor verwendet werden.
Die erfindungsgemäße Sensoreinrichtung kann insbesondere der Erfassung von Gesten, Bewegungen oder Hand-Positionen dienen. Vorzugsweise ist zumindest der überwiegende Teil der Sensorelektronik inklusive Messelektroden in einer kompakten chip-ähnlichen Form aufgebaut. Hierdurch wird eine besonders vorteilhafte Anwendung der Sensortechnik ermöglicht.

Kurze Beschreibung der Zeichnungen

Weitere Einzelheiten und Merkmale der Erfindung ergeben sich aus der nachfolgenden Beschreibung in Verbindung mit der Zeichnung. Es zeigt:

**Figur 1**   ein Blockschaltbild zur Veranschaulichung des Grundaufbaus einer erfindungsgemäßen Sensoreinrichtung;
**Figur 2**   ein Schaltbild zur Veranschaulichung des Aufbaus der Eingangsschaltung;
**Figur 3**   eine Schemadarstellung zur Veranschaulichung eines beispielhaften Aufbaus der Geber- und der Empfangselektrodeneinrichtungen;
**Figur 4**   einen Schaltplan zur Veranschaulichung einer erfindungsgemäßen Ausgangsschaltung;
**Figur 5**   ein Koordinatensystem zur Erläuterung des erfindungsgemäßen Auswertungsprinzips mit Blick auf die XY-Ebene;
**Figur 6**   eine räumliche Ansicht des Koordinatensystem zur weiteren Erläuterung des erfindungsgemäßen Auswertungsprinzips;

**Figur 7** eine perspektivische Darstellung zur Veranschaulichung eines erfindungsgemäß errechneten Normalvektors;

**Figur 8** ein Gittersystem mit einem darin auf Grundlage des erfindungsgemäßen Konzept gestenbasiert positionierten Cursor-Punkt;

**Figur 9** ein erstes Diagramm zur Veranschaulichung der räumlichen Zuordnung von Messwerten

**Figur 10** ein zweites Diagramm zur Veranschaulichung der räumlichen Zuordnung von Messwerten;

**Figur 11** ein drittes Diagramm zur Veranschaulichung der räumlichen Zuordnung von Messwerten;

**Figur 12** ein viertes Diagramm zur Veranschaulichung der räumlichen Zuordnung von Messwerten;

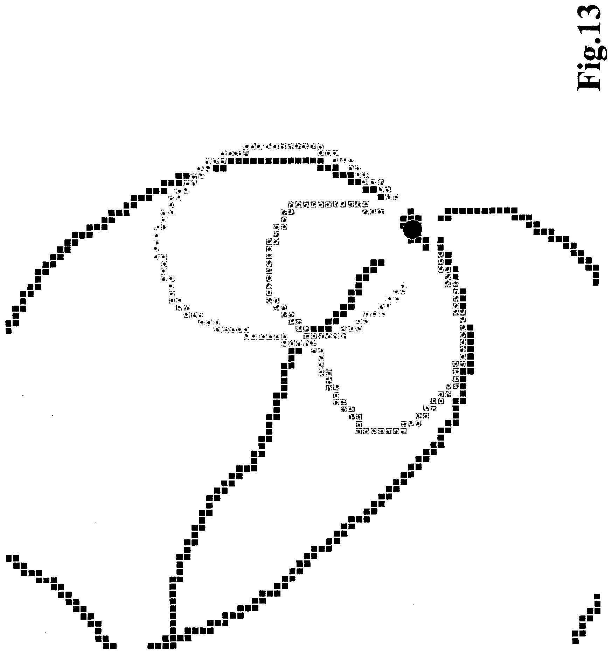

**Figur 13** ein Diagramm zur Veranschaulichung des Verlaufs von Äquipotentiallinien.

Ausführliche Beschreibung der Figuren

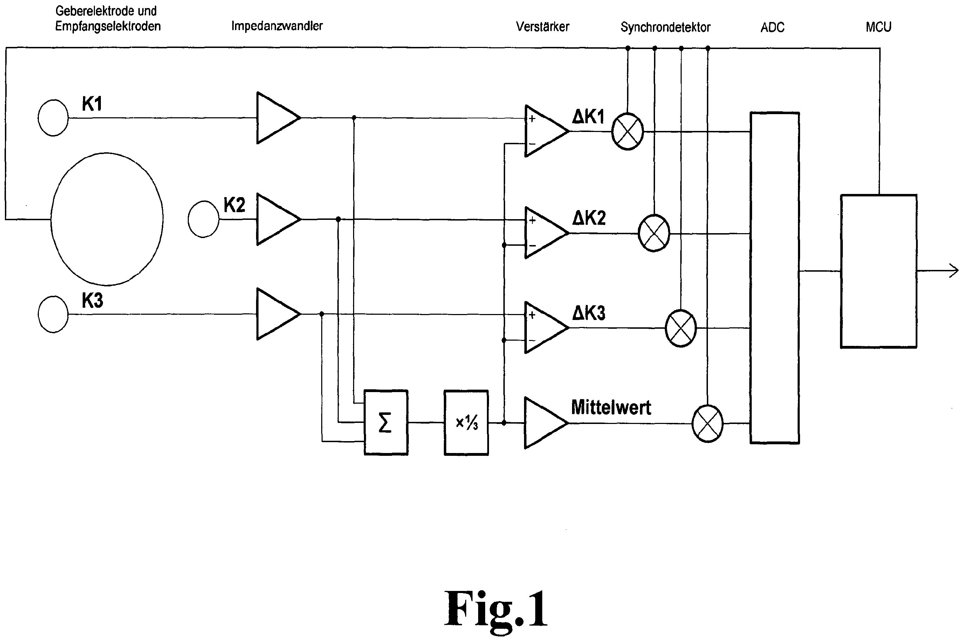

In Figur 1 ist in Form eines Blockschaltbildes ein bevorzugter Schaltungsaufbau einer erfindungsgemäßen Sensoreinrichtung dargestellt.

Die erfindungsgemäße Sensoreinrichtung umfasst vorzugsweise drei Messelektroden K1, K2, K3. Hierbei ergibt sich gegenüber Zwei-Elektroden Konzepten ein homogeneres Feld.

Zur Linearisierung des Responses in Abhängigkeit vom Abstand erfolgt vorzugsweise eine Logarithmierung (z.B. durch Dioden). Vorzugsweise werden die analogen Signale synchron erfasst, beispielsweise mit Hilfe eines schnellen ADC von MSP430-Microcontroller (F2012). In das erfindungsgemäße Modul kann in vorteilhafter Weise ein direkter Anschluss an ein Ident USB-Modul zur Anbindung an PC eingebunden sein.

Bei der Schaltung gemäß Figur 1 wird die Geberelektrode G von einem Generator (Mikrocontroller) mit Wechselspannung versorgt und bildet um sich herum ein elektrisches Feld. Die Empfangselektroden K1, K2, K3 sind symmetrisch um die Geberelektrode G angeordnet, die elektrische Spannung an ihnen beinhaltet Information über die Verteilung des Feldes der Geberelektrode G. Die Spannungen (ac) an den Empfangselektroden K1, K2 und K3 liegen an den Kanälen 1, 2 und 3 der Impedanzwandler I1, I2, I3 an. Um das elektrische Feld nicht zu stören, sind die Empfangselektroden K1, K2, K3 an die hochohmigen Eingänge der Impedanzwandler I1, I2, I3 angeschlossen.

Aus den Signalen nach dem Impedanzwandler wird einen Mittelwert gebildet. Für jeden Kanal wird im Weiteren die Differenz seines Signals und des Mittelwertes verstärkt: ΔK1, ΔK2 und ΔK3. Der Mittelwert wird auch verstärkt.

Aus den verstärkten Signalen wird mit Hilfe eines Synchrondetektors die Amplitude gewonnen und weiter von einem ADC digitalisiert und zur Auswertung an einen Mikrocontroller übergeben. Statt des Synchrondetektors kann z.B. ein Diodengleichrichter, ein Peakdetektor usw. eingesetzt werden, oder alternativ kann vom ADC direkt die Wechselspannung digitalisiert werden.

Der Mikrocontroller stellt ausgewertete oder teilweise ausgewertete Ergebnisse zur weiteren Verarbeitung, insbesondere Extraktion von X,Y und ggf. Z-Informationen zur Verfügung.

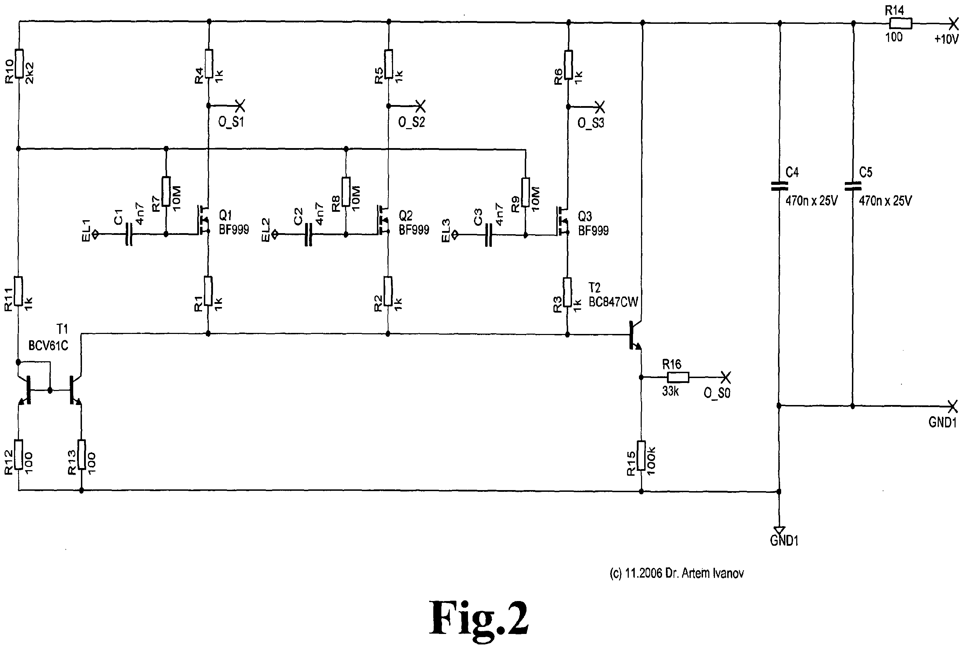

In Figur 2 ist eine bevorzugte Gestaltung einer erfindungsgemäßen Eingangsschaltung veranschaulicht. Die in Figur 2 gezeigte Eingangsschaltung bildet drei Kanäle. Jeder Kanal hat eine Empfangselektrode (EL1 bis EL3 bezeichnet) und ist mit einem MOSFET aufgebaut. Die Schaltung ist als ein Differenzverstärker konzipiert, allerdings mit mehr als zwei (in diesem Fall mit drei) Kanälen. Alle drei Transistoren Q1, Q2 und Q3 hängen zusammen auf einer Stromquelle (realisiert mit T1). Die Signale werden an Drains der Transistoren abgenommen: jeder Kanal hat einen eigenen Ausgang O_S1 bis O_S3. Zusätzlich gibt es noch einen Ausgang (O_S0). Dieser zeigt die Summe aus den drei Eingangssignalen und kommt vom Emitterfolger T2.

Die MOSFETs haben Widerstände in ihren Quellen, um die unterschiedlichen Kennlinien der Transistoren auszugleichen.

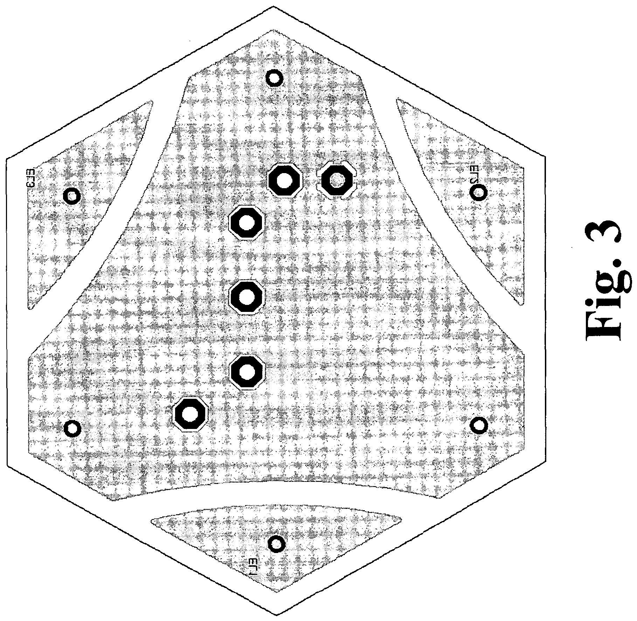

In Figur 3 ist die geometrische Anordnung der Elektroden K1, K2, K3 dargestellt. Auf diesem Bild sieht man, dass in der Mitte die große Fläche (GND1) liegt, die die ganze Schaltung mit den ganzen Bauelementen vom äußeren elektrischen Feld abschirmt. Die Elektroden liegen symmetrisch mit einem 120° Winkel zueinander und bilden somit ein Dreieck.

Das Signal GND1 ist relativ zu Ground nicht konstant: es oszilliert beispielsweise mit einer Trägerfrequenz von ca. 100 kHz. Die Amplitude an GND1 ist etwa 5 Volt Spitze-Spitze. Erzeugt wird diese Schwingung im zweiten Teil der Schaltung.

Das Feld, das durch das Signal GND1 erzeugt wird, wird vom Menschen gestört und zwar so, dass die menschliche Hand bzw. das menschliche Bein einen Kurzschluss zu Erde darstellt. Das Feld nimmt in der Richtung, in der die Hand steht, schnell ab. Das spiegelt sich in elektrischen Signalen an den Elektroden K1, K2, K3 wieder und an den Ausgängen der Schaltung.

Die Idee, die Schaltung als einen Differenzverstärker aufzubauen, führt dazu, dass in einem ungestörten Zustand, in dem das Feld vom Signal GND1 nicht beeinflusst ist, jede Elektrode aus Symmetriegründen ein gleiches Potential und eine gleiche Wechselfeldamplitude hat. Diese Wechselfeldamplitude beträgt ca. 1 bis 2 Volt und ändert sich relativ zu diesem Pegel wenig, wenn man eine Hand in die Nähe der Schaltung bringt. Dadurch dass die Differenzeingangsschaltung dieses gleichphasige Eingangssignal sehr stark abschwächt, werden an den Ausgängen nur die Unterschiede zwischen den Elektrodensignalen dargestellt.

Diese Unterschiede verstehen sich dann als kleine Signale, die weiter verstärkt werden können.

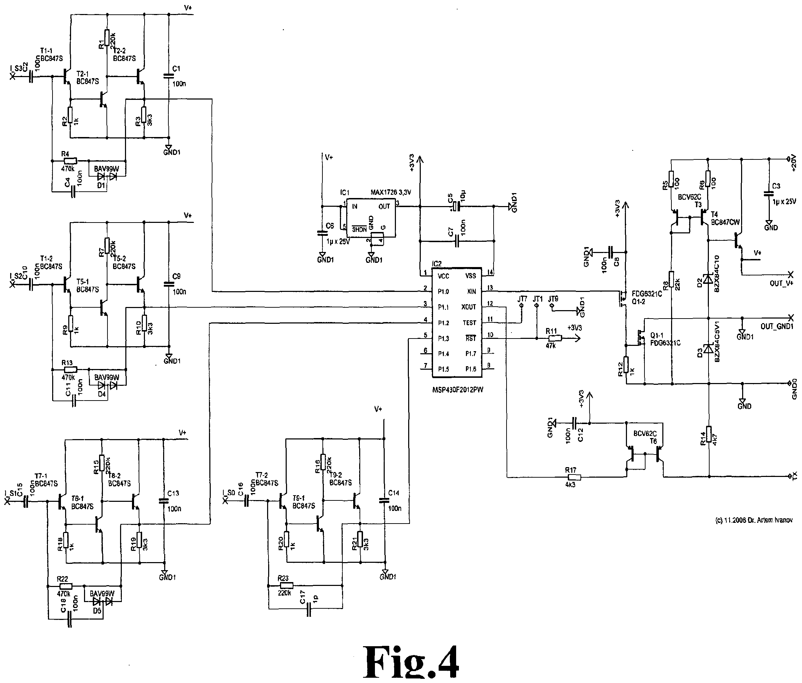

In Figur 4 ist eine erfindungsgemäße Schaltung dargestellt mit welcher eine logarithmische Kompression realisiert werden kann. In dieser Schaltung werden die Ausgangssignale der Elektroden weiter verstärkt, mit Hilfe eines Analog/digital Wandlers im Controller digitalisiert und vom Controller durch das UART Interface an den PC übertragen. Der Controller übernimmt gleichzeitig die Erzeugung der Trägerfrequenz und die synchrone Detektion der einzelnen Signale.

Die Output-Signale der Eingangsschaltung (O_S0 bis O_S3) kommen an die Input-Anschlüsse I_S0 bis I_S3 an. Die Verstärkung des Kanals S0 (Summensignal) erfolgt linear mit einem Koeffizienten von ca.7 (T7-2, T9-1, T9-2). Die Elektrodensignale S1 bis S3 werden mit einer logarithmischen Kennlinie verstärkt. Unterschiede in der schaltungstechnischer Ausführung der Verstärker bestehen nur in der Rückkopplung - resistiv bzw. mit Dioden - die Grundverstärker selbst sind vorzugsweise gleich ausgeführt.

Der Grundverstärker besteht aus 3 Transistoren, seine Verstärkung beträgt etwa 40dB. Durch diese relativ hohe Verstärkung wurde erreicht, dass die Eigenschaften aller Kanäle und der Hexagon-Schaltungen zueinander trotz der Transistorstreuung sehr gleich bleiben.

Die Funktionsweise des Verstärkers wird unter Bezugnahme auf den Kanal S3 beispielhaft erläutert. Die Transistoren T1-1 und T2-2 sind als Emitterfolger geschaltet und dienen zur Anpassung des Eingangs- bzw. des Ausgangswiderstandes. Der Transistor T2-1 wirkt als Verstärker, wobei die Verstärkung eigentlich durch den Spannungsabfall auf den Emitterwiderstand bestimmt ist, d.h. dass die Verstärkung ist eigentlich von der Speisespannung abhängig. Bei der angewendeter Speisespannung von ca. 9,5V ergibt sich die Verstärkung ca. 40dB.

Durch die Verwendung der Logarithmierung für die Kanäle S1 bis S3 wird es möglich, die stark unlineare Abhängigkeit der Signale vom Abstand zu kompensieren. Das heißt, die kleinen Signalen, die von einem weit gelegenen Objekt kommen, werden starker verstärkt als die großen Signale, die in der Nähe der Schaltung auftreten. Damit wird für die gesamte Schaltung eine flachere Übertragungskurve erreicht. Für das Summensignal S0 ergeben sich bessere Ergebnisse bei der linearen Verstärkung.

Zur Erzeugung des GND1 Signals dient der Schaltungsteil um die Transistoren Q1,T3 und T4. Die Ausgangsspannung V+ (Ausgang OUT_V+) ist relativ zu GND1 konstant und beträgt ca. 9,5 Volt, wobei die beide Spannungen zusammen relativ zu Erde - in unserem Fall GND - mit etwa 5 Volt Spitze-Spitze, abhängig von dem Ausgang des Controllers, hin- und herspringen. Dieses Springen erfolgt mit der Trägerfrequenz von ca. 100 kHz. Diese Frequenz ist synchron mit der Abtastfrequenz für jeden Kanal, damit ist die Synchronität und die Synchrondetektion von den Kanaleingängen gewährleistet.

Die Anbindung an den PC erfolgt via TX Leitung, die beispielsweise an das durch die Anmelderin entwickelte Ident USB-Modul angeschlossen werden kann. Da der Controller auch relativ zu GND1 arbeitet, muss sein Ausgangssignal zu Erde relativiert werden. Das geschieht mit Hilfe eines Stromspiegels, aufgebaut um den Transistor T6.

Als Mikrocontroller ist der MSP430F2012 eingesetzt. Dieser hat eine Taktfrequenz von 16 Megahertz und kann bis über 200 Kilosamples pro Sekunde digitalisieren, was ihn für unsere Synchronmodulation sehr geeignet macht.

**Layout**

Die erfindungsgemäße Eingangsschaltung und die Ausgangsschaltung sind vorzugsweise jeweils als eigene (sechseckige) Leiterplatte gestaltet. Geometrisch sind die Kontakte für die GND1, V+, S0 bis S3 vorzugsweise so ausgeführt, des die LP übereinander platziert werden können und mit geraden Drahtabschnitten zusammengeführt werden.

Das Layout der beiden Leiterplatten hat sich als bedeutsam erwiesen. Vorzugsweise erfolgt die Abstimmung derart, dass zu einem, die Messelektroden in gleichen Bedingungen bezüglich elektrischen Feldes liegen, und zum anderen, die gesamte Verstärkung aller Kanäle gleich ist ohne wesentlich von parasitären Kapazitäten gestört zu werden..

Die oben genannten Anforderungen können in besonders vorteilhafter Weise erfüllt werden indem:

1. die Elektroden müssen mit 120°-Symmetrie angeordnet werden.
2. die LP die gleiche Symmetrie wie die Elektroden haben, um das Feld darauf nicht zu stören. Das heißt: dreieckig, sechseckig usw. bis rund.
3. die relativ zu GND0 konstanten Signale (GND0, +20V) werden von den Messelektroden möglichst abgeschirmt, dal diese gleich dem Signal vom Anwender sind.

**Datenauswertung / Software**

Es sind insbesondere zwei funktional hervortretende Ansätze zur Auswertung der Messgrößen erprobt worden.

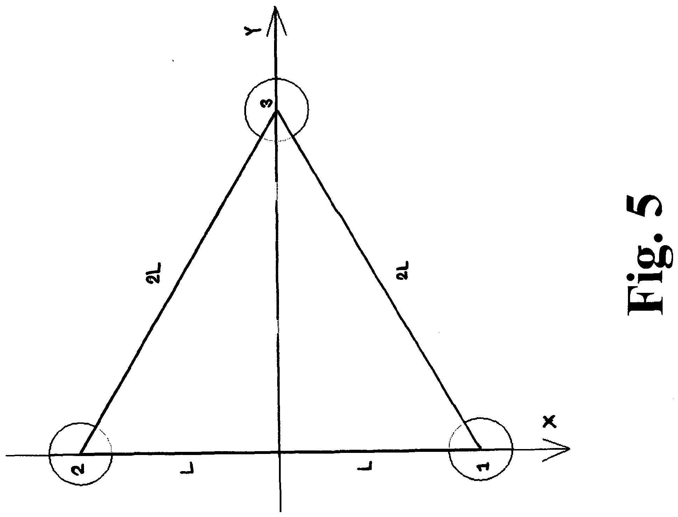

Als erster Ansatz wird hierbei die Feldapproximation mit einer geneigter Ebene und Ausrechnung der Koordinaten mit Hilfe einer hinterlegten Referenztabelle beschrieben. Die nachfolgende Beschreibung des Ansatzes der Feldapproximation mit einer geneigter Ebene erfolgt in Verbindung mit den Figuren 5, 6 und 7.

Feldapproximation mit einer geneigten Ebene

Diese Art der Auswertung basiert auf relativ groben Modellvorstellungen über die Weise, wie das elektrische Feld um das Hexagon vom Menschen beeinflusst wird. Diese Methode erfordert relativ geringe Rechenkapazitäten und eignet sich insbesondere für einfachere Anwendungen wie Feststellung der Ankommrichtung oder grobe Tastenfunktionen. Die größten Ungenauigkeiten bei dieser Methode treten in unmittelbarer Nähe zum Hexagon auf.

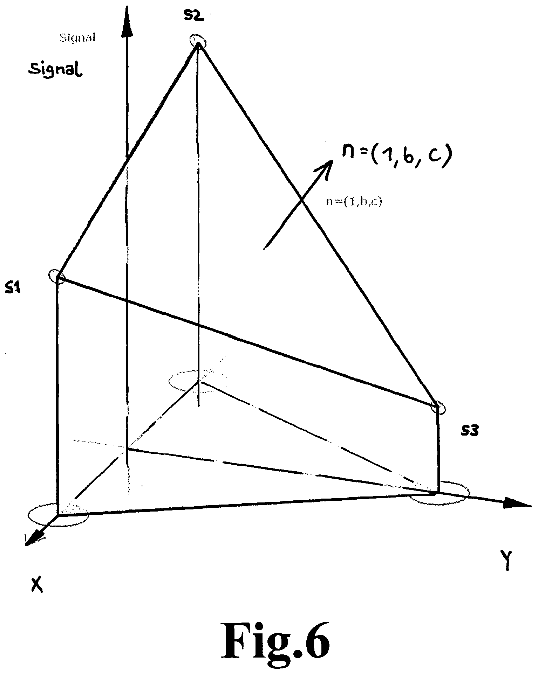

Für das Modell werden 3 Achsen eingeführt: X und Y in der Ebene der Elektroden, und die Signal-Achse S (s. Fig.5 und Fig.6).

Die Elektroden sind in Fig.5 mit 1, 2, 3 bezeichnet. Die Seite des Dreiecks, an dem die Elektroden liegen ist 2L. Die Ausgangssignale von Hexagon für die Elektroden 1 bis 3 sind als $S_1$ bis $S_3$ bezeichnet und auf der Signalachse dargestellt (Fig.6).

Diese 3 Punkte im (x,y,z)-Raum definieren eine Ebene, die zu derjenigen Elektrode am stärksten "geneigt" ist, die das kleinste Signal hat. Die Richtung der Neigung der Ebene stimmt mit der Richtung des Störers des elektrischen Feldes (d.h. Menschlichen Hand); die Neigung der Ebene nimmt zu, wen der Störer näher an die Elektroden kommt.

Die quantitativen Aussagen über die Richtung und Abstand zum Störer können mit Hilfe der analytischen Geometrie überraschend zuverlässig gewonnen werden. Dafür wird die Gleichung für die Ebene in der Form

$$x + by + cS + d = 0$$

geschrieben, wobei der Normalvektor $\vec{n} = (1, b, c)$ ist (Fig.5). Nach Ansetzen der Werte für die Elektroden in die Gleichung und Lösen des linearen Systems, kommt man an die Parameter des Normalvektors:

$$c = -\frac{2L}{S_1 - S_2}, \quad b = -\frac{S_1 + S_2 - 2S_3}{\sqrt{3}(S_1 - S_2)}.$$

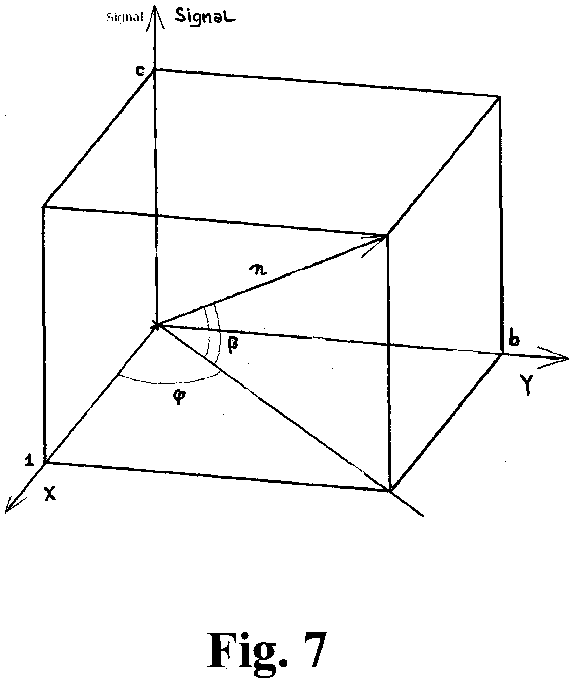

Aus diesen Parameter werden die gesuchte Werte für die Richtung φ und Abstand R (ausgedruckt durch die Neigung β) gewonnen (Fig. 7).

$$\varphi = arctg(b),$$

$$R = R_0 \frac{2\beta}{\pi}, \quad \beta = arctg\left(\frac{c}{\sqrt{1 + b^2}}\right).$$

Die Koordinaten des Störers sind dann als R und φ bekannt.

Diese Koordinaten sind eindeutig für die Positionen der Hand nicht sehr nah zum Hexagon (ausgenommen der Uneindeutigkeit bei unterschiedlichen Finger zur Faust/Hand Stellungen). Die errechnete Richtung der Bewegung der Hand stimmt nicht immer mit der tatsächlichen Richtung der Bewegung überein.

Berechnung der Koordinaten mit Hilfe einer hinterlegten Referenztabelle (zweiter Ansatz)

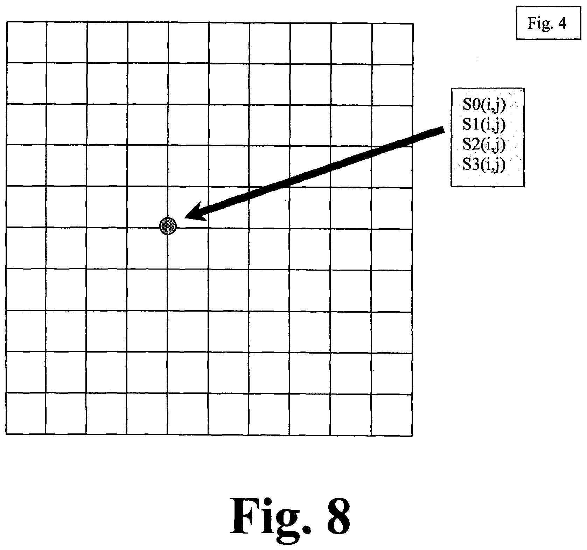

Diese Auswertungsmethode wird in Verbindung mit Figur 8 erläutert. Dieses Konzept ermöglicht es insbesondere auch die Möglichkeiten der Hardware und Software zu Testen. Die Methode basiert auf dem Vorhandensein einer Tabelle der Werte aller Kanäle über einer "Tischfläche". Diese Werte werden aus einer Messung gewonnen (Eingelernt). Die Messung findet in mehreren quadratisch angeordneten äquidistanten Punkten statt. Als geeignet hat sich ein Gitter mit 20cm x 20cm und 2cm Schritt erwiesen (Fig. 8). Dabei werden die Messwerte in allen Kreuzpunkten des Gitters erfasst - insgesamt 121 Punkt, markiert mit Indexen i und j - und in eine Tabelle hinterlegt (als Datei für spätere Benutzung gespeichert).

Die hinterlegten Daten haben in diesem Fall beispielsweise die Ortsauflösung von 2cm. Diese relativ grobe Auflösung kann durch Interpolation verfeinert werden. Es hat sich gezeigt, das durch Interpolation die Auflösung in etwa um den Faktor 8 erhöht werden konnte.

Die Interpolation erfolgt vorzugsweise schrittweise jeweils um den Faktor 2. Um die glatten Kurven zu bekommen werden die Daten anhand der ursprünglichen Werte und der Ableitungen der linken und der rechten Seite interpoliert. Gute Ergebnisse sind bei den relativen Gewichten von ursprünglichen Werten zu Ableitungen 8 zu 1 erreicht.

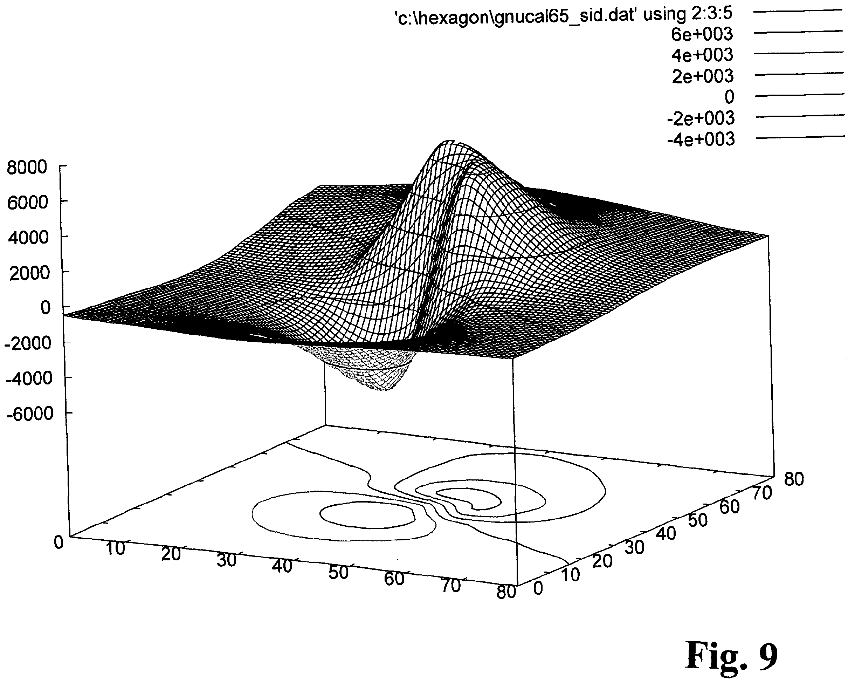

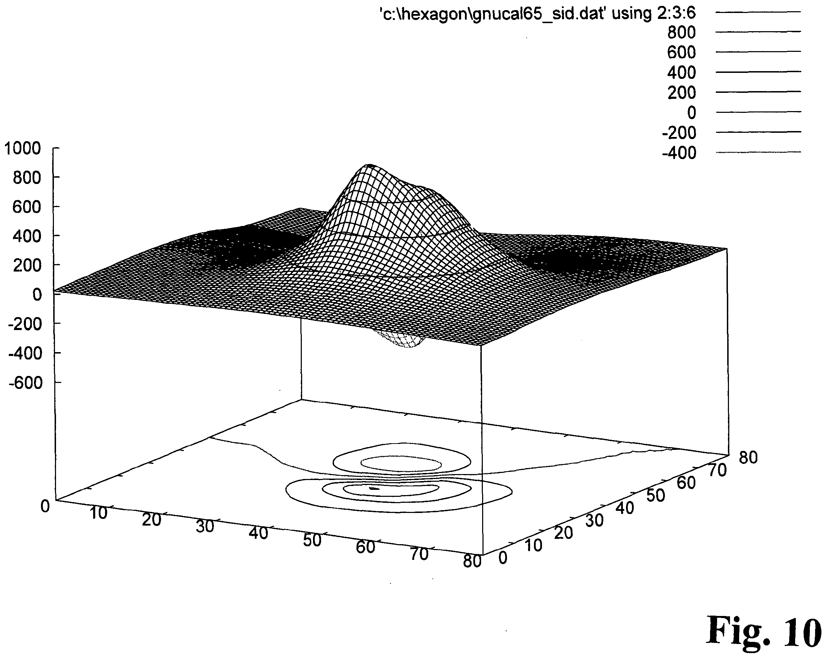

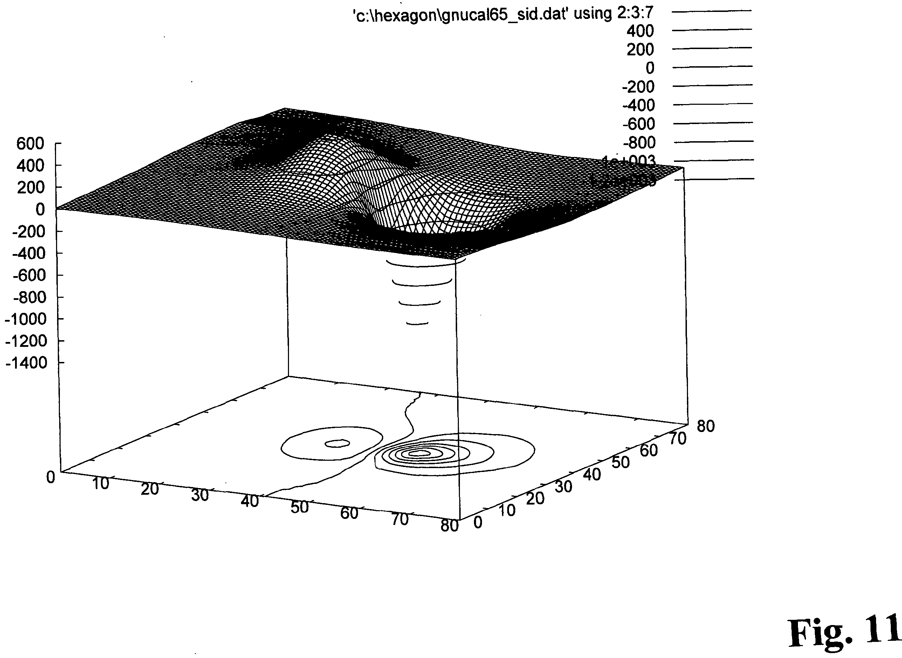

Die gemessenen Daten können für jeden Kanal als Oberflächen in dem (x,y,S)-Raum dargestellt werden (Fig. 9 bis Fig. 12) dargestellt werden. Die Interpolation bewirkt, dass diese Oberflächen "glatt" sind und sinnvolle Werte auch zwischen den gemessenen Daten besitzen. Die dargestellten Messdaten wurden mit einem Hexagon aufgenommen, das unter einer 25mm-dicken Tischplatte angeordnet war. Die detektierte Handbewegung wurde unter bei ausgestrecktem Zeigefinger aufgenommen.

Das Prinzip der Koordinatenbestimmung besteht darin, dass jede vom Hexagon erfasste Handposition ihren einmaligen Satz an Werte der Kanäle besitzt. Die Aufgabe besteht dann "lediglich" daran, eine passende Zelle in der hinterlegten Tabelle zu finden, für die die gemessenen und die hinterlegten Werte übereinstimmen.

Um der Lösung der Aufgabe näher zu kommen, kann man von einer Sichtweise der "Äquipotentiale" ausgehen: für jeden neu gemessenen Wert existiert eine Ganze (x,y)-Kurve, wo die entsprechende (x,y,S)-Oberfläche den Wert annimmt - also ein Äquipotential. Solche Äquipotentiale sind auch in Fig. 9 bis Fig. 12 dargestellt. Die richtige Zelle (Koordinate) ist dann diejenige, an welcher sich alle 4 Äquipotentiale schneiden.

Bei realer Messung tauchen ggf. folgende Schwierigkeiten auf:

- die Handposition entspricht nicht immer derjenigen, die beim Einlernen benutzt wurde,
- der Einlernende und der Benutzer besitzen nicht unbedingt gleiche Hände,
- Rauschen und Drift der Elektronik erlauben es nicht überall, die genau "wie beim Einlernen" Werte zu erzielen, usw.

Das alles führt dazu, dass die Äquipotentiale sich nicht mehr im gleichen Punkt schneiden. Außerdem, bei kleinen Abständen zum Hexagon, z.B. wenn es hinter einer dünnen Plastikplatte (d<10mm) angebracht ist, werden die (x,y,S)-Oberflächen viel komplizierter, die Äquipotentiale zerfallen in mehrere geschlossene Kurven, die viele Schnittmöglichkeiten geben.

Da man nicht von einem einzigen Schnittpunkt der Äquipotentiale ausgehen kann, wird in Software der Abstand zwischen der Äquipotentialen berechnet. Wenn dieser bei allen 4 Äquipotentialen geringer als bestimmter Schwellenwert ist, wird die Koordinate ausgerechnet.

Die Form der (x,y,S)-Oberfläche eines Kanals wird mit $S = f(x,y)$ geschrieben. Zur Berechnung des Abstandes des Äquipotentials des Kanals $k$ mit dem Wert $f_1$ zu einer Zelle, wo der Äquipotential des Kanals $n$ vergeht (da hat der Kanal $k$ den Wert $f_2$) wird die Formel

$$\Delta \vec{r} \approx \frac{f_1 - f_2}{\vec{\nabla} f}$$

eingesetzt. Eine einfache Abschätzung des Wertes des Gradients $\vec{\nabla} f$ kann an den Funktionswerten in den Ecken der betroffenen Zelle gemacht werden:

$$\vec{\nabla} f \approx \frac{f_{max} - f_{min}}{a}.$$

Dabei ist $f_{max}$ und $f_{min}$ der maximale bzw. der minimale Wert von $f$ in der Zelle, $a$ ist die Zellenseite. Somit kann der Abstand wie folgt berechnet werden:

$$\left| \Delta \vec{r} \right| \approx \frac{\left| f_1 - f_2 \right|}{f_{max} - f_{min}} \cdot a.$$

In jeder Zelle wo für alle 4 Kanäle $|\Delta \vec{r}|$ kleiner als einen Schwellenwert ist (z.Zt. 4$a$), wird ein Gewichtfaktor gebildet:

$$w_{i,j} = \frac{1}{\sum\limits_{k=0}^{3} |\Delta \vec{r}|^2},$$

wo die Summierung über alle Kanäle geht.

Die Koordinaten des Fingers werden als gewichtete Summe über alle ausgewählten Zellen definiert:

$$x = \frac{\sum w_{i,j} \cdot i}{\sum w_{i,j}},$$

$$y = \frac{\sum w_{i,j} \cdot j}{\sum w_{i,j}}.$$

Dabei kann der Ausdruck $\sum w_{i,j}$ als Maß für die Genauigkeit der Rechnung angesehen werden.

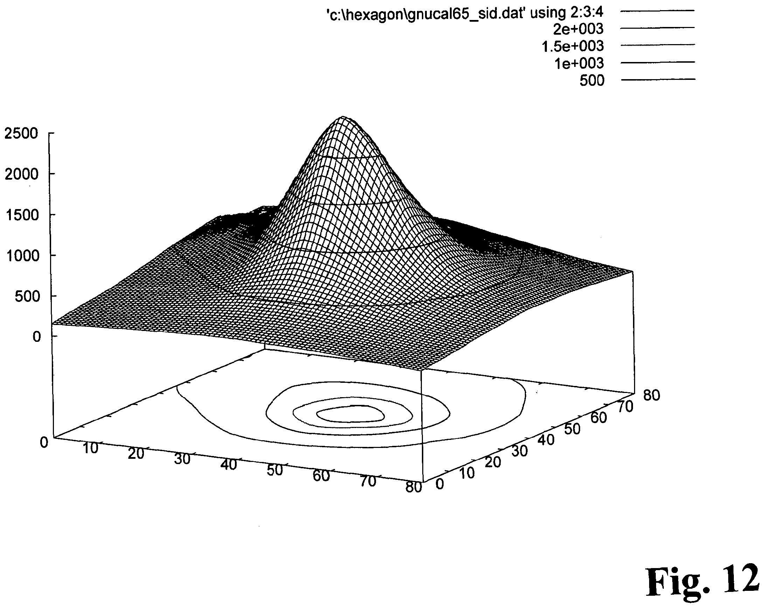

Die oben angegebene Vorgehensweise ist in Fig. 12 veranschaulicht. Im Bild ist eine Momentaufnahme dargestellt mit vier Kurven der Äquipotentiale (S0: Magenta, S1: rot, S2: grün, S3: cyan). Gelb sind Zellen auf den Äquipotentialen markiert, die Abstände zu den 3 anderen Kanälen weniger als $4a$ haben. Schwarz sind Zellen mit Abständen zu den 3 anderen Kanälen weniger als $2a$. Der blauer Kreis liegt in der ausgerechneten Koordinaten $(x, y)$.

Die Anwendbarkeit dieser Auswertungsmethode wurde auch für die Bestimmung der Z-Position des Fingers untersucht.

Für die Bestimmung der Z-Position muss das Einlernen für noch mindestens eine Ebene über dem Tisch erfolgen. Es kann mit Hilfe einer Unterlage passender Dicke geschehen. Im Experiment wurde eine Dicke von ca. 2cm über dem Tisch eingesetzt. Nach dem Einlernen erfolgt eine lineare Interpolation der Werte zwischen den 2 gemessenen Lagen. Damit werden Daten für einige Z-Schichten produziert.

Die Koordinaten des Fingers werden in der Software immer für alle Schichten berechnet. Als Kriterium für die Auswahl der angezeigten "aktiven" Schicht und somit der Z-Bestimmung diente der Ausdruck $\sum w_{i,j}$, der für jede Schicht gebildet war. Er stellt ein Maß für die Genauigkeit der Berechnung in jeder Schicht dar. Diejenige Schicht, wo der Ausdruck am größten war (d.h. wo die Äquipotentiale am nächsten zusammen kamen), wurde als "aktiv" genommen. Die Z-Koordinate des Fingers war dann die Höhe dieser Schicht.

Die Ergebnisse zeigen, dass in der Nähe vom Hexagon die Z-Koordinate tatsächlich definiert werden kann. Nachteilig für diese Methode war nicht immer richtige Z und relativ hohe Sprunge in des (x,y)-Koordinaten beim Wechseln der aktiven Schicht. Zusammenfassend kann festgestellt werden, das diese Methode eine besonders sichere Erfassung der räumlichen Bewegung der hand eines Anwenders innerhalb eines für Handgesten typischen Bewegungsbereiches ermöglicht. Insbesondere bei Anwendungen, bei welchen der Anwender anhand der dargestellten Koordinaten (z.B. am Bildschirm) die Position seiner Hand entsprechend nachstellen kann (z.B. Mouse-Funktion).

Es ist auch möglich, die vorangehend beschriebenen Ansätze zu kombinieren. Weiterhin ist es möglich, zur Kompensation von Übertragungs- und Messwertfehlern Daten, die außerhalb des zulässigen Wertebereichs liegen, werden durch alte, gültige Daten zu ersetzten.

$$y(t) = x(t-1) \quad \forall \quad \begin{cases} x < x_{min} \\ x > x_{max} \end{cases}$$

Weiterhin ist es möglich, einen (Gleitenden) Medianfilter einzusetzten. Aus einem Satz von in einem beliebigen Zeitfenster aufeinanderfolgenden Messwerten wird der in der Mitte liegende (Medianwert) ausgewählt. Dadurch werden stark vom Mittelwert abweichende Werte herausgefiltert.

$$y(t) = median(x(t - a), x(t - a + 1), ..., x(t - 1), x(t))$$

Es ist auch möglich, einen (Gleitenden) Mittelwert zu errechnen. So kann aus einem Satz von in einem willkürlich festgelegten Zeitfenster aufeinander folgenden Messwerten ein Mittelwert gebildet werden (arithmetisches Mittel).

$$y(t) = Mittelwert\,(x(t - a), x(t - a + 1), ..., x(t - 1), x(t))$$

Weiterhin erfolgt vorzugsweise eine Kalibrierung. Bei der Kalibrierung werden die nach 2. gefilterten Messwerte weiter verarbeitet. Ziel der Kalibrierung ist es, Signaländerungen, welche durch eine Bewegung eines Körpers (Hand) im Detektionsfeld verursacht wurden von Signaländerungen, welche durch Änderung der Umgebungsbedingungen (Zeit seit dem Einschalten, Temperatur, etc.) hervorgerufen werden zu trennen. Die folgenden Punkte können wiederum einzeln oder in Kombinationen eingesetzt werden.

Die vorliegend beschriebene Erfindung eignet sich insbesondere zur Realisierung einer Eingabeeinrichtung für kleinbauende mobile Kommunikationsgeräte wie sie in der auf die Anmelderin zurückgehenden deutschen Patentanmeldung DE 10 2007 016 408.6.

## Patentansprüche

1. Sensoreinrichtung zur Generierung von elektrischen Signalen die als solche Aufschluss über die Position oder Bewegung von Gliedmaßen gegenüber einem Bezugsbereich geben, mit:

   - einer Geberelektrode,
   - einem Spannungsgenerator, zur Beaufschlagung der Geberelektrode (G) mit einer Wechselspannung;
   - einer ersten Empfangselektrode (K1),
   - einer zweiten Empfangselektrode (K2), und
   - einer dritten Empfangselektrode (K3),

   **gekennzeichnet durch,**
   einen ersten, zweiten und dritten Impedanzwandler, wobei die an den Empfangselektroden (K1, K2 und K3) anliegenden Spannungen jeweils einem hochohmigen Eingang des ersten, zweiten und dritten Impedanzwandlers zugeführt werden um das elektrische Feld der Geberelektrode nicht zu stören,
   einer einen Mittelwert bildenden Schaltung welcher die Ausgangssignalen der Impedanzwandler zugeführt werden;
   wobei jedem Impedanzwandler ein Differenzverstärker ($\Delta$K1, $\Delta$K2, $\Delta$K3) nachgeschaltet ist, welcher die Differenz aus dem Ausgangssignal des zugehörigen Impedanzwandlers und des Mittelwertes bildet; und
   einem Verstärker welchem der Mittelwert zugeführt wird.

2. Sensoreinrichtung nach Anspruch 1, **dadurch gekennzeichnet, dass** eine Signalverarbeitungseinrichtung (ADC, MCU) vorgesehen ist welche Ausgangssignale der Differenzverstärker ($\Delta$K1, $\Delta$K2, $\Delta$K3) und des Verstärkers auswertet und welche derart ausgebildet ist dass anhand der zugeführten Ausgangssignale eine Position und/oder Bewegung von Gliedmaßen ermittelt wird.

3. Sensoreinrichtung nach Anspruch 1 oder 2, **dadurch gekennzeichnet, dass** die Impedanzwandler und nachgeschalteten Differenzverstärker ($\Delta$K 1, $\Delta$K2, $\Delta$K3) durch einen dreikanaligen Differenzverstärker gebildet werden, welcher einen ersten, zweiten und dritten Feldeffekttransistor (Q1, Q2, Q3) aufweist deren Gate-Anschlüsse jeweils mit einer der Empfangselektroden (K1, K2 und K3) gekoppelt sind und deren Source-Anschlüsse mit einer Stromquelle (T1) verbunden sind und an deren Drain-Anschlüssen ein jeweiliges Ausgangssignal des dreikanaligen Differenzverstärkers abgreifbar ist, wobei die Stromquelle mit einem Emitterfolger (T2) verbunden ist an dessen Ausgang ein Summensignal abgreifbar ist.

4. Sensoreinrichtung nach Anspruch 3, wobei die Stromquelle durch einen Stromspiegel (T1, R10, R11, R12, R13) gebildet wird welcher hochohmig mit den Gate-Anschlüssen der Feldeffekttransistoren (Q1, Q2, Q3) rückgekoppelt ist.

**5.** Sensoreinrichtung nach Anspruch 4, **dadurch gekennzeichnet dass** die Ausgangssignale des dreikanaligen Differenzverstärkers und das Summensignal jeweils einer Verstärkerstufe zugeführt werden, deren Ausgänge mit analogen Eingängen (P1.0, P1.1, P1.2, P1.3) eines Mikrokontrollers (IC2) verbunden sind.

**6.** Sensoreinrichtung nach Anspruch 5, **dadurch gekennzeichnet dass** die den Empfangselektroden (K1, K2, K3) zugeordneten Verstärkerstufen eine logarithmische Kennlinie aufweisen.

**7.** Sensoreinrichtung nach wenigstens einem der Ansprüche 1 bis 2, **dadurch gekennzeichnet, dass** ein Synchrondetektor vorgesehen ist, welchem die Ausgangssignale der Differenzverstärker ($\Delta$K1, $\Delta$K2, $\Delta$K3) und des Verstärkers zugeführt werden und der derart ausgebildet ist, dass aus den zugeführten Ausgangssignalen die Amplituden gewonnen werden.

**8.** Sensoreinrichtung nach wenigstens einem der Ansprüche 1 bis 7, **dadurch gekennzeichnet, dass** die Empfangselektroden (K1, K2, K3) symmetrisch um die Geberelektrode herum angeordnet sind,

**9.** Sensoreinrichtung nach wenigstens einem der Ansprüche 1 bis 8, **dadurch gekennzeichnet, dass**, die Geberelektrode von einem Mikrocontroller (MCU) mit einer Wechselspannung versorgt wird und um sich herum ein elektrisches Feld bildet, wobei die an den Empfangselektroden anliegende elektrische Spannung Information über die Verteilung des Feldes der Geberelektrode beinhaltet.

**10.** Sensoreinrichtung nach Anspruch 7, **dadurch gekennzeichnet, dass** die mit Hilfe des Synchrondetektors gewonnenen Amplituden von einem Analog-Digital-Wandler (ADC) digitalisiert und zur Auswertung an einen Mikrocontroller (MCU) übergeben werden, oder dass statt des Synchrondetektors ein Diodengleichrichter oder ein Peakdetektor verwendet wird.

**11.** Sensoreinrichtung nach wenigstens einem der Ansprüche 1 oder 2, **dadurch gekennzeichnet, dass** ein Analog-Digital-Wandler (ADC) jeweils direkt eine Wechselspannung an den Ausgängen der Differenzverstärker ($\Delta$K 1, $\Delta$K2, $\Delta$K3) digitalisiert.

**12.** Verfahren zur Generierung von elektrischen Signalen die als solche Aufschluss über die Position oder Bewegung von Gliedmaßen gegenüber einem Bezugsbereich geben, mit den Schritten:

Anlegen einer Wechselspannung an eine Geberelektrode, und

- Erfassen der Spannungen von wenigstens drei in Nachbarschaft zur Geberelektrode angeordnete Empfangselektroden (K1, K2, K3), wobei diese Spannungen hochohmig durch jeweilige Impedanzwandler abgegriffen werden,
- Bildung eines Mittelwertes von Ausgangsspannungen der Impedanzwandler;
- Bildung, an einem ersten, zweiten und dritten Differenzverstärker, jeweils einer ersten, zweiten und dritten Differenzspannung zwischen der jeweiligen Ausgangsspannung eines Impedanzwandlers und des Mittelwerts.

**13.** Verfahren nach Anspruch 12, **dadurch gekennzeichnet, dass** der Mittelwert einem Verstärker zugeführt wird.

**14.** Verfahren nach Anspruch 12 oder 13, **dadurch gekennzeichnet, dass** die Ausgangssignale der jeweiligen Verstärkers hinsichtlich ihrer Synchronität ausgewertet werden, insbesondere bezüglich des Spannungspegels und/oder der Phase, wobei aus den verstärkten Signalen mit Hilfe eines Synchrondetektors die Amplitude gewonnen wird und weiter von einem Analog-Digital-Wandler (ADC) digitalisiert und für Auswertung in einen Mikrocontroller (MCU) übergeben wird.

**15.** Verfahren nach Anspruche 12 oder 13, **dadurch gekennzeichnet, dass** die Ausgangssignale des ersten, zweiten und dritten Differenzverstärkers ($\Delta$K1, $\Delta$K2, $\Delta$K3) jeweils einem Diodengleichrichter zugeführt werden, oder dass Ausgangssignale des ersten, zweiten und dritten Differenzverstärkers ($\Delta$K1, $\Delta$K2, $\Delta$K3) jeweils einem Peakdetektor zugeführt werden, oder dass Ausgangssignale des ersten, zweiten und dritten Differenzverstärkers ($\Delta$K1, $\Delta$K2, $\Delta$K3) jeweils direkt von einem Analog-Digital-Wandler (ADC) digitalisiert werden.

**Claims**

1.  A sensor apparatus for generating electric signals which as such provide information about the position or movement of limbs with respect to a reference area, comprising:

    - a sending electrode,
    - a voltage generator for supplying an alternating voltage to the sending electrode (G);
    - a first receiving electrode (K1),
    - a second receiving electrode (K2), and
    - a third receiving electrode (K3),

    **characterized by**
    a first, second and third impedance converter, wherein the voltages present at the receiving electrodes (K1, K2 and K3) each are fed to a highly resistive input of the first, second and third impedance converter to not disturb the electric field of the sending electrode,
    a mean value generating circuit to which the output signals of the impedance converters are fed;
    wherein downstream each impedance converter a differential amplifier (ΔK1, ΔK2, ΔK3) is arranged, which generates the difference between the output signal of the respective impedance converters and the mean value; and
    an amplifier, to which the mean value is supplied.

2.  The sensor apparatus of claim 1, **characterized in that** a signal processing device (ADC, MCU) is provided which analyzes output signals of the differential amplifiers (ΔK1, ΔK2, ΔK3) and of the amplifier and which is formed such that by means of the output signals supplied a position and/or movement of limbs is determined.

3.  The sensor apparatus of claim 1 or 2, **characterized in that** the impedance converters and the downstream differential amplifiers (ΔK1, ΔK2, ΔK3) are formed by a three-channel differential amplifier, which has first, second and third field effect transistors (Q1, Q2, Q3), the gate connections of which each are coupled with one of the receiving electrodes (K1, K2 and K3) and the source connections of which are connected to a current source (T1) and at drain connections of which a respective output signal of the three-channel differential amplifier may be tapped, wherein the current source is connected to an emitter follower (T2) at the output of which a summed signal may be tapped.

4.  The sensor apparatus of claim 3, wherein the current source is formed by means of a current mirror (T1, R10, R11, R12, R13), which is fed back to the gate connections of the field effect transistors (Q1, Q2, Q3) in a highly resistive manner.

5.  The sensor apparatus of claim 4, **characterized in that** the output signals of the three channel differential amplifier and the summed signal each are fed to an amplifier stage, the outputs of which are connected to analog inputs (P1.0, P1.1, P1.2, P1.3) of a microcontroller (IC2).

6.  The sensor apparatus of claim 5, **characterized in that** the amplifier stages assigned to the receiving electrodes (K1, K2, K3) have a logarithmic characteristic.

7.  The sensor apparatus of at least one of claims 1 to 2, **characterized in that** a synchronous detector is provided, to which the output signals of the differential amplifiers (ΔK1, ΔK2, ΔK3) and of the amplifier are fed and which is formed such, that the amplitudes are extracted from the output signals imparted.

8.  The sensor apparatus of at least one of claims 1 to 7, **characterized in that** the receiving electrodes (K1, K2, K3) are arranged symmetrically around the sending electrode.

9.  The sensor apparatus of at least one of claims 1 to 8, **characterized in that** the sending electrode is supplied with an alternating voltage by a microcontroller (MCU) and forms an electric field around itself, wherein the electric voltage present at the receiving electrodes comprises information about the distribution of the field of the sending electrode.

10. The sensor apparatus of claim 7, **characterized in that** the amplitudes extracted by means of the synchronous detector are digitized by means of an analog-to-digital converter (ADC) and are delivered to a microcontroller (MCU) for interpretation, or that a diode rectifier or a peak detector is used instead of the synchronous detector.

11. The sensor apparatus of at least one of claims 1 or 2, **characterized in that** an analog-to-digital converter (ADC) directly digitizes an alternating voltage at the outputs of the differential amplifiers ($\Delta$K 1, $\Delta$K2, $\Delta$K3), respectively.

12. A method for generating electric signals, which as such provide information about the position or movement of limbs with respect to a reference area, comprising the steps of:

applying an alternating voltage to a sending electrode, and

- determining the voltages of at least three receiving electrodes (K1, K2, K3) arranged near the sending electrode, wherein these voltages are tapped highly resistive by means of respective impedance converters,
- generating a mean value of output voltages of the impedance converters;
- generating, at a first, second and third differential amplifier, each a first, second and third differential voltage between the respective output voltage of an impedance converter and the mean value.

13. The method of claim 12, **characterized in that** the mean value is fed to an amplifier.

14. The method of claim 12 or 13, **characterized in that** the output signals of the respective amplifiers are analyzed with respect to their synchronicity, particularly with respect to the voltage level and/or phase, wherein the amplitude is extracted from the amplified signals by means of a synchronous detector and further is digitized by means of an analog-to-digital converter (ADC) and is delivered to a microcontroller (MCU) for interpretation.

15. The method of claim 12 or 13, **characterized in that** the output signals of the first, second and third differential amplifiers ($\Delta$K1, $\Delta$K2, $\Delta$K3) each are fed to a diode rectifier, or that output signals of the first, second and third differential amplifiers ($\Delta$K1, $\Delta$K2, $\Delta$K3) each are fed to a peak detector, or that output signals of the first, second and third differential amplifiers ($\Delta$K1, $\Delta$K2, $\Delta$K3) each are digitized directly by an analog-to-digital converter (ADC).


**Revendications**

1. Dispositif à capteur pour la génération de signaux électriques qui donnent, en tant que tels, des informations concernant la position ou le mouvement de membres par rapport à un zone de référence, avec :

- une électrode émettrice,
- un générateur de tension, pour l'alimentation de l'électrode de détecteur (G) avec une tension alternative ;
- une première électrode réceptrice (K1),
- une deuxième électrode réceptrice (K2) et
- une troisième électrode réceptrice (K3),

**caractérisé par**
un premier, un deuxième et un troisième convertisseur d'impédance, les tensions appliquées aux électrodes réceptrices (K1, K2 et K3) étant introduites dans une entrée à haute résistance du premier, du deuxième et du troisième convertisseur d'impédance afin de ne pas perturber le champ électrique de l'électrode émettrice,
un circuit formant une valeur moyenne, dans lequel sont introduits les signaux de sortie des convertisseurs d'impédance ;
un amplificateur différentiel ($\Delta$K1, $\Delta$K2, $\Delta$K3) étant branché en aval de chaque convertisseur d'impédance, qui forme la différence entre le signal de sortie du convertisseur d'impédance correspondant et la valeur moyenne ; et
un amplificateur dans lequel la valeur moyenne est introduite.

2. Dispositif à capteur selon la revendication 1, **caractérisé en ce qu'**un dispositif de traitement de signaux (ADC, MCU) est prévu, qui analyse les signaux de sortie des amplificateurs différentiels ($\Delta$K1, $\Delta$K2, $\Delta$K3) et de l'amplificateur et qui est conçu de façon à déterminer une position et/ou un mouvement de membres à l'aide des signaux de sortie introduits.

3. Dispositif à capteur selon la revendication 1 ou 2, **caractérisé en ce que** les convertisseurs d'impédance et les amplificateurs différentiels ($\Delta$K1, $\Delta$K2, $\Delta$K3) branchés en aval sont constitués d'un amplificateur différentiel à trois canaux, qui comprend un premier, un deuxième et un troisième transistor à effet de champ (Q1, Q2, Q3) dont les connecteurs de grilles sont couplés chacun avec une des électrodes réceptrices (K1, K2 et K3) et dont les connecteurs de sources sont reliés avec une source de courant (T1) et dont les connecteurs de drains permettent de prélever un signal de sotie de l'amplificateur différentiel à trois canaux, la source de courant étant reliée à un émetteur-suiveur (T2) à la sortie duquel un signal de somme peut être prélevé.

4. Dispositif à capteur selon la revendication 3, la source de courant étant constituée d'un miroir de courant (T1, R10, R11, R12, R13), qui est couplé, avec une haute résistance, avec les connecteurs de grilles des transistors à effet de champ (Q1, Q2, Q3).

5. Dispositif à capteur selon la revendication 4, **caractérisé en ce que** les signaux de sortie de l'amplificateur différentiel à trois canaux et le signal de somme sont introduits chacun dans un étage d'amplificateur dont les sorties sont connectées avec des entrées analogiques (P1.0, P1.1, P1.2, P1.3) d'un micro-contrôleur (IC2).

6. Dispositif à capteur selon la revendication 5, **caractérisé en ce que** les étages d'amplificateurs correspondant aux électrodes réceptrices (K1, K2, K3) présentent une caractéristique logarithmique.

7. Dispositif selon au moins l'une des revendications 1 à 2, **caractérisé en ce qu'**un détecteur synchrone est prévu, dans lequel sont introduits les signaux de sortie des amplificateurs différentiels ($\Delta$K1, $\Delta$K2, $\Delta$K3) et de l'amplificateur et qui est conçu de façon à ce que les amplitudes sont extraites des signaux de sortie introduits.

8. Dispositif selon au moins l'une des revendications 1 à 7, **caractérisé en ce que** les électrodes réceptrices (K1, K2, K3) sont disposées symétriquement autour de l'électrode émettrice.

9. Dispositif selon au moins l'une des revendications 1 à 8, **caractérisé en ce que** l'électrode émettrice est alimentée par un micro-contrôleur (MCU) avec une tension alternative et un champ se forme autour de celle-ci, la tension électrique appliquée aux électrodes réceptrices contenant des informations concernant la répartition du champ de l'électrode émettrice.

10. Dispositif à capteur selon la revendication 7, **caractérisé en ce que** les amplitudes obtenues à l'aide du détecteur synchrone sont numérisées par un convertisseur analogique-numérique (ADC) et sont transmises pour analyse à un micro-contrôleur (MCU) ou **en ce que**, au lieu du détecteur synchrone, un redresseur à diodes ou un détecteur de pic soit utilisé.

11. Dispositif selon au moins l'une des revendications 1 ou 2, **caractérisé en ce qu'**un convertisseur analogique-numérique (ADC) numérise directement une tension alternative au niveau des sorties des amplificateurs différentiels ($\Delta$K1, $\Delta$K2, $\Delta$K3).

12. Procédé de génération de signaux électriques qui donnent, en tant que tels, des informations concernant la position ou le mouvement de membres par rapport à une zone de référence, avec les étapes suivantes :

application d'une tension alternative à une électrode émettrice et

- mesure des tensions d'au moins électrodes réceptrices (K1, K2, K3) disposées à proximité de l'électrode émettrice, ces tensions étant prélevées, avec une haute résistance, par des convertisseurs d'impédance correspondants,
- formation d'une valeur moyenne des tensions de sortie des convertisseurs d'impédance ;
- formation, au niveau d'un premier, d'un deuxième et d'un troisième amplificateur différentiel, d'une première, d'une deuxième et d'une troisième tension différentielle entre la tension de sortie correspondante d'un convertisseur d'impédance et la valeur moyenne.

13. Procédé selon la revendication 12, **caractérisé en ce que** la valeur moyenne est introduite dans un amplificateur.

14. Procédé selon la revendication 12 ou 13, **caractérisé en ce que** les signaux de sortie de l'amplificateur correspondant sont analysés en ce qui concerne leur synchronicité, plus particulièrement en ce qui concerne le niveau de tension et/ou la phase, l'amplitude étant obtenue à partir des signaux amplifiés à l'aide d'un détecteur synchrone et numérisée par un convertisseur analogique-numérique (ADC) et transmise pour analyse dans un micro-contrôleur (MCU).

15. Procédé selon les revendications 12 ou 13, **caractérisé en ce que** les signaux de sortie du premier, du deuxième et du troisième amplificateur différentiel ($\Delta$K1, $\Delta$K2, $\Delta$K3) sont introduits chacun dans un redresseur à diodes ou **en ce que** les signaux de sortie du premier, du deuxième et du troisième amplificateur différentiel ($\Delta$K1, $\Delta$K2, $\Delta$K3) sont introduits chacun dans un détecteur de pic ou **en ce que** les signaux de sortie du premier, du deuxième et du

troisième amplificateur différentiel ($\Delta$K1, $\Delta$K2, $\Delta$K3) sont numérisées chacun directement par un convertisseur analogique-numérique (ADC).

Fig.1

EP 2 147 364 B1

R14
100
+10V

R10
2k2

R4
1k

O_S1

R5
1k

O_S2

R6
1k

O_S3

C4
470n x 25V

C5
470n x 25V

R7
10M

EL1
C1
4n7

Q1
BF999

R8
10M

EL2
C2
4n7

Q2
BF999

R9
10M

EL3
C3
4n7

Q3
BF999

R11
1k

R1
1k

R2
1k

R3
1k

T2
BC847CW

T1
BCV61C

R16
33k

O_S0

R12
100

R13
100

R15
100k

GND1

GND1

(c) 11.2006 Dr. Artem Ivanov

# Fig.2

Fig. 3

Fig.4

Fig. 5

Fig.6

Fig. 7

Fig. 4

S0(i,j)
S1(i,j)
S2(i,j)
S3(i,j)

# Fig. 8

Fig. 9

'c:\hexagon\gnucal65_sid.dat' using 2:3:6
800
600
400
200
0
-200
-400

**Fig. 10**

'c:\hexagon\gnucal65_sid.dat' using 2:3:7

Fig. 11

EP 2 147 364 B1

Fig. 12

Fig.13

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 9741458 A

- DE 102007016408